(19) **Europäisches Patentamt / European Patent Office / Office européen des brevets**

(11) **EP 3 538 562 B1**

(12) ## EUROPEAN PATENT SPECIFICATION

(45) Date of publication and mention of the grant of the patent:
**09.04.2025  Bulletin 2025/15**

(21) Application number: **17790791.2**

(22) Date of filing: **31.10.2017**

(51) International Patent Classification (IPC):
**C08F 2/00** (2006.01)    **C08L 23/12** (2006.01)
**C08L 23/14** (2006.01)

(52) Cooperative Patent Classification (CPC):
(C-Sets available)
**C08L 23/12; C08L 23/142;** C08L 2205/025;
C08L 2205/035; C08L 2207/02          (Cont.)

(86) International application number:
**PCT/EP2017/077854**

(87) International publication number:
**WO 2018/086959 (17.05.2018 Gazette 2018/20)**

(54) **POLYPROPYLENE COMPOSITIONS CONTAINING GLASS FIBER FILLERS**

POLYPROPYLENZUSAMMENSETZUNGEN MIT GLASFASERFÜLLSTOFFEN

COMPOSITIONS DE POLYPROPYLÈNE CONTENANT DES CHARGES DE FIBRES DE VERRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2016  EP 16198425**

(43) Date of publication of application:
**18.09.2019  Bulletin 2019/38**

(73) Proprietor: **Basell Poliolefine Italia S.r.l.**
**20121 Milano (IT)**

(72) Inventors:
• **CAVALIERI, Claudio**
  **44122 Ferrara (IT)**
• **GRAZZI, Michele**
  **44122 Ferrara (IT)**

• **KÖHLER,Rainer**
  **91257 Pegnitz (DE)**
• **ROHRMANN, Jürgen**
  **65779 Kelkheim (DE)**

(74) Representative: **LyondellBasell**
**c/o Basell Poliolefine Italia**
**Intellectual Property**
**P.le Donegani 12**
**44122 Ferrara (IT)**

(56) References cited:
| EP-A1- 2 589 623 | EP-A1- 2 589 623 |
| EP-A2- 0 465 317 | EP-A2- 0 465 317 |
| EP-B1- 2 092 015 | WO-A1-2015/028955 |
| WO-A1-2015/028955 | US-A1- 2012 225 993 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08L 23/12, C08L 23/16, C08L 23/12, C08K 7/14;**
**C08L 23/142, C08L 23/16, C08L 23/12, C08K 7/14;**
C08F 110/06, C08F 2500/12, C08F 2500/35;

C08F 210/16, C08F 210/06, C08F 210/08,
C08F 2500/12, C08F 2500/17, C08F 2500/27,
C08F 2500/35, C08F 2500/30;
C08F 210/16, C08F 210/06, C08F 210/08,
C08F 2500/12, C08F 2500/27, C08F 2500/35;
C08F 210/16, C08F 210/08, C08F 2500/12,
C08F 2500/35, C08F 2500/27

**Description**

FIELD OF THE INVENTION

The present disclosure relates to polypropylene compositions containing glass fiber fillers having a high Melt Flow Rate (MFR) and a good balance of mechanical properties.

The MFR is measured according to ISO 1133 with a load of 2.16 kg at 230 °C (except when different methods are reported for commercial products by the manufacturers).

In some embodiments, the compositions of the present disclosure show excellent mechanical (high stiffness and ductility) and thermal properties (low shrinkage), while displaying an increase in final MFR, notwithstanding the presence of glass fibers.

BACKGROUND OF THE INVENTION

In the automotive industry, 10-80% by weight of glass fiber reinforced thermoplastic polyolefin compound for injection molding is used for aesthetical automotive interior applications. These materials may be characterized by a soft touch haptic, a matt surface, enhanced sound dampening qualities with high stiffness and excellent scratch resistance. Trim components for interior designs, *e.g.* in cars or airplanes, and external car parts are known applications of these thermoplastics.

EP2121829, EP2092004 and EP2092015 disclose the use of high melt flow polypropylene polymers blended with other thermoplastic, olefin elastomers, plastomers and glass fiber fillers for improved balance in processability and mechanical properties. The reported compositions have relatively melt flow rate (MFR) high values as well as very high amounts of fillers and/or pigments. In particular, the compositions of EP2092015 disclose the addition of elastomeric components including heterophasic thermoplastics.

WO2015000738 discloses a composition having a melt flow rate of from 2 to 100 g/ 10 min comprising: A) from 30 to 60% by weight, such as from 40 to 55% by weight, of a polyolefin composition comprising, (all percent amounts being by weight):

a) 10-50% by weight of a copolymer of propylene with one or more comonomer(s) selected from ethylene and $CH_2$=CHR alpha-olefins, where R is a 2-8 carbon alkyl, where the copolymer contains from 1 to 8% by weight, including from 1 to 5% by weight of comonomer(s), such as from 1 to 4.5% by weight, when the sole comonomer is ethylene;

b) 50-90% by weight of a copolymer of ethylene and (i) propylene; or (ii) other $CH_2$=CHR alpha-olefin(s), where R is a 2-8 carbon alkyl radical; or (iii) a combination thereof, optionally with minor amounts of a diene, containing from 50 to 80% by weight of ethylene;

wherein the weight ratio B/XS of the content B of copolymer component (B) to the fraction XS that is soluble in xylene at room temperature (about 25 °C), both (B and XS) referring to the total weight of (A) + (B), is of 1.5 or less, such as 1.4 or less and from 1.5 or 1.4 to 0.8, and the intrinsic viscosity [η] of the said XS fraction is of 3 dl/g or more, for instance from 3.5 to 7 dl/g;

B) from 5 to 30wt%, including from 10 to 20wt%, of a glass fiber filler;

C) from 0 to 5 %, such as from 0.5 to 3% by weight, of a compatibilizer;

D) from 10 to 40 by weight, including from 15 to 35 % by weight, of a polypropylene component selected from propylene homopolymers, propylene copolymers containing up to 5% by moles of ethylene, and $C_4$-$C_{10}$ α-olefin(s) and combinations thereof.

The polyolefin composition of WO2015000738 shows an interesting overall balance of properties, but still exhibits a limited flowability (MFR < 10.0 gr/10 min.).

DESCRIPTION OF THE INVENTION

To overcome the above described challenges, the Applicants have found that the replacement of component A with different thermoplastic polyolefins allows for the maintenance of an excellent balance of mechanical properties while enhancing the final MFR.

Accordingly, an object of the present disclosure is a composition having a melt flow rate, measured according to ISO 1133 with a load of 2.16 kg at 230 °C, of from 12 to 100 g/10 min, such as from 12 to 50 g/10min, and comprising components A, B, C and D, as specified below:

A) 30-60% by weight, such as 40-55% by weight, of a polyolefin composition selected between AX and AY,

wherein AX comprises:

(A1) 5-35% by weight of a propylene-based polymer containing 90% by weight or more of propylene units and containing 10% by weight or less of a fraction soluble in xylene at 25 °C (XSA1), where both the amount of propylene units and of the fraction XSA1 refer to the weight of (A1);
(B1) 25-50% by weight of an ethylene homopolymer containing 5% by weight or less of a fraction soluble in xylene at 25 °C (XSB1) with respect to the weight of (B1); and
(C1) 30-60% by weight of a copolymer of ethylene and propylene containing from 25% to 75% by weight of ethylene units and containing from 55% to 95% by weight of a fraction soluble in xylene at 25 °C (XSC1), where both the amount of ethylene units and the fraction XSC1 refer to the weight of (C1);
the amounts of (A1), (B1) and (C1) refer to the total weight of (A1) + (B1) + (C1); and

AY comprises:

(A2) 5-35% by weight of a propylene-based polymer containing 90% by weight or more of propylene units and 10% by weight or less of a fraction soluble in xylene at 25 °C (XSA2), where both the amount of propylene units and of the fraction XSA2 refer to the weight of (A2);
(B2) 25-50% by weight of a copolymer of ethylene and a C3-C8 alpha-olefin containing from 0.1% to 20% by weight of alpha-olefin units and 75% by weight or less of a fraction soluble in xylene at 25 °C (XSB2), where both the amount of ethylene units and of the fraction XSB2 refer to the weight of (B2); and
(C2) 30-60% by weight of a copolymer of ethylene and propylene containing from 25% to 75% by weight of ethylene units and 55% to 95% by weight of a fraction soluble in xylene at 25 °C (XSC2), where both the amount of ethylene units and of the fraction XSC2 refer to the weight of (C2);
where the amounts of (A2), (B2) and (C2) refer to the total weight of (A2) + (B2) + (C2);

B) 5-30% by weight, including 10-25% by weight, of a glass fiber filler;
C) 0-5% by weight, such as 0.5-3% by weight, of a compatibilizer;
D) 10-40% by weight, including 15-35% by weight, of a polypropylene component selected from propylene homopolymers, propylene copolymers containing up to 5% by moles of ethylene, $C_4$-$C_{10}$ $\alpha$-olefin(s) and combinations thereof.

## Component A

The component A can be produced using polymerization processes carried out in the presence of stereospecific Ziegler-Natta catalysts supported on magnesium dihalides.
In some embodiments, the polyolefin composition AX may be prepared according to the process and conditions described in WIPO Appl. No. PCT/EP2016/064450.
In additional embodiments, the polyolefin composition AY may be prepared according to the process and conditions described in WIPO Appl. No. PCT/EP2016/064453.

## Component B

The filler component B comprises fibers made of glass. The glass fibers may be cut glass fibers or long glass fibers, or may be in the form of continuous filament fibers, including cut glass fibers, which are also known as short fibers or chopped strands.
In general, the glass fibers can have a length of from 1 to 50 mm.
The cut or short glass fibers used in the compositions of the present disclosure may have a length of from 1 to 6 mm, or from 3 to 4.5 mm, and a diameter of from 8 to 15 $\mu$m, or from 10 to 13 $\mu$m.
Some examples of component B are the following commercial products: Glass Fibers ECS O3T 480, sold by Nippon Electric Glass Company Ltd., and Chopped Glass Fibers Chopvantage® HP 3270, sold by PPG Industries Fiber Glass Americas.

## Component C

The polypropylene compositions of the present disclosure can also comprise a compatibilizer C.
Such compatibilizers may comprise a modified (functionalized) polymer and, optionally, a low molecular weight compound having reactive polar groups. Modified olefin polymers, such as propylene homopolymers and copolymers including copolymers of ethylene and propylene with each other or with other alpha-olefins, may be used, as they are highly compatible with the polymeric component of the compositions of the present disclosure. Modified polyethylene can be used as well.

In terms of structure, the modified polymers are typically selected from graft or block copolymers.

In some embodiments, modified polymers containing groups derived from polar compounds, including but not limited to acid anhydrides, carboxylic acids, carboxylic acid derivatives, primary and secondary amines, hydroxyl compounds, oxazoline, epoxides and ionic compounds, may be used.

Specific examples of polar compounds for use in the present technology are unsaturated cyclic anhydrides, their aliphatic diesters, and diacid derivatives. In some embodiments, maleic anhydride and compounds selected from $C_1$-$C_{10}$ linear and branched dialkyl maleates, $C_1$-$C_{10}$ linear and branched dialkyl fumarates, itaconic anhydride, $C_1$-$C_{10}$ linear and branched itaconic acid, dialkyl esters, maleic acid, fumaric acid, itaconic acid and mixtures thereof may be used.

In additional embodiments, a propylene polymer grafted with maleic anhydride as the modified polymer may be used.

Modified polymer(s) can be produced by reactive extrusion of the polymer, for example, with maleic anhydride in the presence of free radical generators (like organic peroxides), as disclosed in EP0572028.

In some embodiments, the amounts of groups deriving from polar compounds in the modified polymers of the present disclosure are from 0.5 to 3% by weight.

In further embodiments, MFR values for the modified polymers are from 50 to 400 g/10 min.

It is also possible to use a masterbatch, which comprises fillers and the compatibilizers in premixed form, for producing the modified polymers.

Some examples of component C are the following commercial products: Exxelor™ PO 1020, sold by ExxonMobil Chemical Company, SCONA® TPPP 8112 FA, sold by Byk (Altana Group), SCONA® TPPP 8112 GA sold by Byk (Altana Group), Bondyram® 1101, sold by Polyram, and POLYBOND® 3200, sold by Chemtura.

Component D

In some embodiments, Component D is a high melt flow rate (MFR) component. The MFR value of component D can result from mixing various propylene homopolymers and/or copolymers with different MFR values.

In such mixtures the MFR value for component D can be easily determined, on the basis of the amounts and MFR values of the single polymers, by means of the known correlation between the MFR of a polyolefin composition and the MFR of the separate components, which, for instance, in the case of two polymer components $D^1$ and $D^2$, can be expressed as follows:

$$\ln \text{MFR}^D = [W_D{}^1/(W_D{}^1 + W_D{}^2)] \times \ln \text{MFR}^1 + [W_D{}^2/(W_D{}^1 + W_D{}^2)] \times \ln \text{MFR}^2$$

where $W_D{}^1$ and $W_D{}^2$ represent the weight of components $D^1$ and $D^2$, respectively, while $\text{MFR}^D$ represent the calculated value of MFR for component D and $\text{MFR}^1$ and $\text{MFR}^2$ represent the MFR of components $D^1$ and $D^2$ respectively.

When combinations (blends) of such propylene homopolymers and/or copolymers are used as polypropylene component D, blending at least two homopolymers and/or copolymers with different MFR values, where the difference is at least 3 g/10 min, including at least 10 g/10 min, may be performed.

In some embodiments, when the MFR of the polypropylene component D is less than 500 g/10 min, such as from 0.3 to 450 g/10 min, component D can comprise two polymer fractions, $D^I$ and $D^{II}$, selected from the above referenced propylene homopolymers and copolymers, where fraction $D^{II}$ has a higher MFR value with respect to $D^I$, with a difference in the MFR values as referenced above.

In additional embodiments, fraction $D^{II}$ has a MFR value from 500 to 2,500 g/10 min, including from 1,200 to 2,500 g/10 min.

In further embodiments, from 5 to 80% by weight of $D^I$ and 20 to 95% by weight of $D^{II}$, and from 10 to 70% by weight of $D^I$ and 30 to 90% by weight of $D^{II}$, all referring to the total weight of D, may be used.

Moreover, the MFR values may be obtained without any degradation treatment. In other words, the polypropylene component D is typically made of "as-polymerized" propylene polymers, not subjected to any additional treatment after polymerization that is able to substantially change the MFR value. Thus, the molecular weights of the polypropylene component D are generally those directly obtained in the polymerization process used to prepare the propylene polymers.

Alternatively, the MFR values are obtained by the degradation (visbreaking) of propylene polymers having lower MFR values.

All the MFR values for the polypropylene component D are measured according to ISO 1133, with a load of 2.16 kg at 230 °C.

The comonomers in the propylene copolymers that can be present in the polypropylene component D) are selected from ethylene and $C_4$-$C_{10}$ α-olefins, such as butene-1, pentene-1, 4-methylpentene-1, hexene-1 and octene-1.

All the propylene polymers and copolymers of the polypropylene component D can be prepared by using a Ziegler-Natta catalyst or a metallocene-based catalyst system in the polymerization process.

The catalysts and the polymerization processes are known in the art. Detailed description of the processes and conditions can be found, for instance, in WO2010/069998, which describes processes for preparing components $D^{II}$ and $D^{I}$.

Composition Comprising Components A, B, C and D

The compositions according to the present disclosure are obtainable by melting and mixing the components in a mixing apparatus at temperatures from 180 to 320 °C, including from 200 to 280 °C and from 200 to 260 °C.

Any known apparatus and technology capable of melting and mixing the components can be used.

Useful mixing apparatuses in this context include extruders and kneaders such as twin-screw extruders. It is also possible to premix the components at room temperature in a mixing apparatus.

In some embodiments, initially melting the polymeric components A and D and optionally component C, and subsequently mixing component B with the melt, in order to reduce the abrasion in the mixing apparatus and the fiber breakage, may be performed.

During the preparation of the polypropylene compositions of the present disclosure, in addition to the main components A and B and D and possibly some compatibilizing agent(s) C, it is possible in some embodiments to introduce additives commonly employed in the art, such as stabilizing agents (for protection against heat, light, UV radiation), plasticizers, antistatics and water repellant agents. The amount of such additives (in the form of an addpack) may be less than 10wt% with respect to the total weight of the composition.

Due to their favorable balance of properties, the compositions of the present disclosure can be used in many applications, like injection moulded articles such as interior parts for automotive, electrical appliances, furniture, and formed articles such as sheets, parts for electrical appliances, furniture, housewares, and as masterbatches and concentrates. A "masterbatch" is a concentrated mixture of pigments and/or additives encapsulated during a high temperature process into a carrier resin, which is then cooled and reduced into a granular shape. Masterbatches and concentrates allow the processor to color raw polymer economically during a plastic manufacturing process.

The following analytical methods are used to determine the properties reported in the description and in the examples.

Melt Flow Rate (MFR): ISO 1133 with a load of 2.16 kg at 230 °C;

Flexural Modulus (secant): ISO 178 on rectangular specimens 80x10x4 mm from T-bars ISO527-1 Type 1A;

Impact notched: ISO 179 (type 1, edgewise, Notch A) on rectangular specimens comprising components A, B, C and D 80x10x4 mm from T-bars ISO527-1 Type 1A;

Longitudinal and transversal thermal shrinkage: ISO 2554 for 48 hours at 40 bars and at room temperature.

Xylene cold soluble content (XS): Xylene soluble fraction is determined according to the following method:

2.5 g of polymer and 250 $cm^3$ of o-xylene are introduced in a glass flask equipped with a refrigerator and a magnetic stirrer. The temperature is raised in 30 minutes from room temperature up to the boiling point of the solvent (135 °C). The resulting clear solution is then kept under reflux and stirred for an additional 30 minutes. The closed flask is then kept in a thermostatic water bath at 25 °C for 30 minutes so that crystallization of the insoluble (XI) part of the sample takes place. The resulting solid is then filtered on quick filtering paper. 100 $cm^3$ of the filtered liquid is poured in a previously weighed aluminum container, which is heated on a heating plate under nitrogen flow to remove the solvent by evaporation. The container is kept in an oven at 80 °C under vacuum to dry the sample and then it is weighed after a constant weight is obtained. The percent by weight of polymer soluble and insoluble in xylene at 25 °C may then be determined.

Intrinsic viscosity (IV):

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostated liquid. The downward passage of the meniscus is timed by a photoelectric device.

The passage of the meniscus in front of the upper lamp starts the counter, which has a quartz crystal oscillator. The meniscus stops the counter as it passes the lower lamp and the efflux time is registered: this value is converted into a value of intrinsic viscosity through Huggins' equation (Huggins, M.L., J. Am. Chem. Soc., 1942, 64, 2716), provided that the flow time of the pure solvent is known at the same experimental conditions (same viscometer and same temperature). One single polymer solution is used to determine [η].

Ethylene comonomer content (C$_2$- content) for HDPE-containing polyolefin composition:

The content of comonomer was determined by infrared (IR) spectroscopy by collecting an IR spectrum of the sample vs. an air background with a Fourier Transform Infrared (FTIR) spectrometer. The instrument data acquisition parameters were:

a) purge time: 30 seconds minimum
b) collect time: 3 minutes minimum
c) apodization: Happ-Genzel
d) resolution: 2 cm-1.

Sample Preparation - Using a hydraulic press, a thick sheet was obtained by compression molding about 1 g of sample between two aluminum foils. A small portion was cut from this sheet to mold a film. The film thickness was set in order to have a maximum absorbance of the CH$_2$ absorption band recorded at ~720 cm$^{-1}$ of 1.3 a.u. (% Transmittance > 5%). Molding conditions were 180±10 °C (356 °F) and the pressure was around 10 kg/cm$^2$ (142.2 PSI) for about one minute. The pressure was then released, the sample was removed from the press and then cooled to room temperature. The spectrum of pressed film sample was recorded in absorbance vs. wavenumbers (cm$^{-1}$). The following measurements were used to calculate ethylene (C2) content:

A) Area (At) of the combination absorption bands between 4482 and 3950 cm$^{-1}$, which is used for spectrometric normalization of film thickness; and
B) Area (A$_{C2}$) of the absorption band due to methylenic sequences (CH$_2$ rocking vibration) in the range 660 to 790 cm$^{-1}$ after a proper digital subtraction of an isotactic polypropylene (IPP) reference spectrum.

The ratio A$_{C2}$/A$_t$ was calibrated by analyzing ethylene-propylene standard copolymers of known compositions as determined by NMR spectroscopy. A calibration straight line was obtained by plotting A$_{C2}$/A$_t$ versus ethylene weight percent (%C$_2$ wt) and the slope g was calculated from a linear regression. The spectra of the unknown samples were recorded and then the corresponding (A$_t$), (A$_{C2}$) of the unknown sample were calculated. Finally the ethylene content (% C$_2$ wt) of the sample was calculated as follows:

$$\%C2wt = \frac{\frac{A_{C2}}{A_t}}{g}$$

Comonomer (C$_2$ and C$_4$) content for LLDPE-containing polyolefin composition

The content of comonomers was determined by infrared (IR) spectroscopy by collecting the IR spectrum of the sample vs. an air background with a Fourier Transform Infrared (FTIR) spectrometer. The instrument data acquisition parameters were:

a) purge time: 30 seconds minimum
b) collect time: 3 minutes minimum
c) apodization: Happ-Genzel
d) resolution: 2 cm-1.

Sample Preparation - Using a hydraulic press, a thick sheet was obtained by compression molding about 1 g of sample between two aluminum foils. A small portion was cut from this sheet to mold a film. The film thickness was set in order to have a maximum absorbance of the CH$_2$ absorption band recorded at ~720 cm$^{-1}$ of 1.3 a.u. (% Transmittance > 5%). Molding conditions were 180±10 °C (356 °F) and the pressure was around 10 kg/cm$^2$ (142.2 PSI) for about one minute. The pressure was then released, the sample removed from the press and cooled to room temperature. The spectrum of pressed film sample was recorded in absorbance vs. wavenumbers (cm$^{-1}$). The following measurements were used to calculate ethylene (C$_2$) and 1-butene (C$_4$) contents:

A) Area (At) of the combination absorption bands between 4482 and 3950 cm$^{-1}$ which is used for spectrometric normalization of film thickness; and

B) Area ($A_{C2}$) of the absorption band due to methylenic sequences ($CH_2$ rocking vibration) in the range 660 to 790 cm$^{-1}$ after a proper digital subtraction of an isotactic polypropylene (IPP) and a $C_2C_4$ references spectrum.

The factor of subtraction ($FCR_{C4}$) between the spectrum of the polymer sample and the $C_2C_4$ reference spectrum. The reference spectrum is obtained by digital subtraction of a linear polyethylene from a $C_2C_4$ copolymer, in order to extract the $C_4$ band (ethyl group at ~771 cm$^{-1}$).

The ratio $A_{C2}/A_t$ is calibrated by analyzing ethylene-propylene standard copolymers of known compositions as determined by NMR spectroscopy. In order to calculate the ethylene ($C_2$) and 1-butene ($C_4$) content, calibration curves were obtained by using samples of known amounts of ethylene and 1-butene detected by $^{13}$C-NMR.

Calibration for ethylene - A calibration curve was obtained by plotting $A_{C2}/A_t$ versus ethylene molar percent (% C2m), and the coefficient $a_{C2}$, $b_{C2}$ and $c_{C2}$, then calculated from a "linear regression".

Calibration for 1-butene - A calibration curve was obtained by plotting $FCR_{C4}/A_t$ versus butane molar percent (% $C_4$m) and the coefficients $a_{C4}$, $b_{C4}$ and $C_{C4}$, then calculated from a "linear regression".

The spectra of the unknown samples are recorded and then (At), ($A_{C2}$) and ($FCR_{C4}$) of the unknown sample are calculated.

The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

$a_{C4}$, $b_{C4}$, $c_{C4}$ $a_{C2}$, $b_{C2}$, $c_{C2}$ are the coefficients of the two calibrations.

Changes from mol% to wt% are calculated by using molecular weights. $\underline{C_{3-}}$ content: this value (%wt) is calculated after having determined the $C_2$ or $C_2$ and $C_4$ content, as the complement to 100.

Density: ISO 1183-1

The following examples are given for illustrating but not limiting purposes.

EXAMPLES

**Examples 1, 2, 3, 4, 5 and 6 and Comparative Reference Examples 1, 2 and 3**

The following materials are used as components A, B and C and D.

Component A

SOFTELL CA 7469 A: a commercial thermoplastic polyolefin (TPO) made by LyondellBasell's proprietary Catalloy technology, combining the advantages of polyolefins with those of elastomers. It has an MFR of 0.50, a total $C_2$ (ethylene) content of 42.2% by weight, and a total xylene cold soluble content (XS) of 57% by weight, wherein the xylene cold soluble fraction has an intrinsic viscosity (IV) of 4.15 dl/g.

HIFLEX CA 7600 A: a commercial soft thermoplastic polyolefin (TPO), manufactured using the LyondellBasell proprietary Catalloy process technology endowed with high softness and high toughness at very low temperatures and high thermal characteristics. It has an MFR of 2.15, a total $C_2$(ethylene)/$C_4$(1-butene) content of 51.9/3.8% by weight, and a total xylene cold soluble content (XS) of 44% by weight, wherein the xylene cold soluble fraction has an intrinsic viscosity (IV) of 2.40 dl/g.

Polyolefin AX1 (HD based) and Polyolefin AX2 (HD based) were prepared as described in the Examples section of WIPO Appl. No. PCT/EP2016/064450, but with the differences reported in the following table regarding the composition of the single components:

**Table AX**

| Component AX | | | Polyolefin AX1 | Polyolefin AX2 |
|---|---|---|---|---|
| **1st Reactor -component (A1)** | | | | |
| Temperature | | °C | 60 | 60 |
| Pressure | | barg | 16 | 16 |
| $H_2/C_{3-}$ | | mol. | 0.23 | 0.25 |
| Split | | wt% | 17 | 19 |
| Xylene soluble of (A1) ($XS_{A1}$) | | wt% | 3.4 | 3.5 |
| MFR of (A1) | | g/10 min. | 160 | 185 |
| **2nd Reactor - component (B1)** | | | | |
| Temperature | | °C | 85 | 90 |
| Pressure | | barg | 18 | 18 |
| $H_2/C_{2-}$ | | mol. | 0.30 | 0.80 |
| $C_{2-}/(C_{2-} + C_{3-})$ | | mol. | 0.99 | 0.99 |
| Split | | wt% | 38 | 36 |
| $C_{2-}$ content of B1 * | | wt% | 100 | 100 |
| $C_{4-}$ content of B1 * | | wt% | - | - |
| $C_{2-}$ content of (A1+ B1) | | wt% | 65.3 | 65.1 |
| $C_{4-}$ content of (A1+ B1) | | wt % | - | - |
| Xylene soluble of B1 ($XS_{B1}$) * | | wt% | 1 | 1 |
| Xylene soluble of (A1 + B1) | | wt% | 1.6 | 2.8 |
| MFR of B1 ($MFR_{B1}$) * | | g/10 min | 0.45 | 27 |
| MFR of (A1 + B1) | | g/10 min | 3.2 | 50 |
| **3rd Reactor - component (C1)** | | | | |
| Temperature | | °C | 60 | 60 |
| Pressure | | barg | 16 | 16 |
| $H_2/C_{2-}$ | | mol. | 0.22 | 0.24 |
| $C_{2-}/(C_{2-} + C_{3-})$ | | mol. | 0.5 | 0.47 |
| Split | | wt% | 45 | 45 |
| $C_{2-}$ content of C1 * | | wt% | 65 | 63 |
| $C_{2-}$ content of (A1 + B1 + C1) | | wt% | 66.4 | 63.1 |
| Xylene soluble of (C1) ($XS_{C1}$)* | | wt% | 72 | 74 |
| | | | | |
| **Properties of resulting Component AX** | | | **Polyolefin AX1** | **Polyolefin AX2** |
| MFR | | g/10 min. | 0.74 | 3.0 |
| Density | | gr/cc | 0.906 | 0.909 |
| Xylene soluble ($XS_{TOT}$) | | wt% | 31.3 | 31.1 |
| Intrinsic Viscosity of $XS_{TOT}$ | | dl/g | 2.78 | 2.83 |
| $C_{2-}$ content of $XS_{TOT}$ | | wt% | 57.8 | - |
| Total $C_{2-}$ content | | wt% | 66.9 | 63.5 |

(continued)

| Properties of resulting Component AX | | Polyolefin AX1 | Polyolefin AX2 |
|---|---|---|---|
| Flexural Modulus | MPa | 310 | 390 |

Notes: $C_{2-}$ = ethylene (IR); $C_{3-}$ = propylene (IR); (IR); split = amount of polymer produced in the concerned reactor.
* Calculated values.

Polyolefin AY1 (LLD based) and Polyolefin AY2 (LLD based) were prepared as described in the Examples section of WIPO Appl. No. PCT/EP2016/064453, but with the differences reported in the following table regarding the composition of the single components:

**Table AY**

| Component AY | | Polyolefin AY1 | Polyolefin AY2 |
|---|---|---|---|
| **1st Reactor - component (A2)** | | | |
| Temperature | °C | 60 | 60 |
| Pressure | barg | 16 | 16 |
| $H_2/C_{3-}$ | mol. | 0.19 | 018 |
| Split | wt% | 20 | 20 |
| Xylene soluble of (A2) ($XS_{A2}$) | wt% | 3.1 | 3.9 |
| MFR of (A2) | g/10 min. | 92 | 110 |
| **2nd Reactor - component (B2)** | | | |
| Temperature | °C | 80 | 80 |
| Pressure | barg | 18 | 18 |
| $H_2/C_{2-}$ | mol. | 0.58 | 0.74 |
| $C_{4-}/(C_{2-} + C_{4-})$ | mol. | 0.19 | 0.17 |
| $C_{2-}/(C_{2-} + C_{3-})$ | mol. | 0.99 | 0.97 |
| Split | wt% | 33 | 38 |
| $C_{2-}$ content of B2 * | wt% | 90 | 92 |
| $C_{4-}$ content of B2 * | wt% | 10 | 8 |
| $C_{2-}$ content of (A2+ B2) | wt% | 55.9 | 59.5 |
| $C_{4-}$ content of (A2+ B2) | wt % | 5.8 | 5.2 |
| Xylene soluble of B2 ($XS_{B2}$) * | wt% | 16 | 8 |
| Xylene soluble of (A2 + B2) | wt% | 8.0 | 9.0 |
| MFR of B2 ($MFR_{B2}$) * | g/10 min | 3.7 | 11.0 |
| MFR of (A2 + B2) | g/10 min | 12.9 | 25 |
| **3rd Reactor - component (C)** | | | |
| Temperature | °C | 60 | 60 |
| Pressure | barg | 16 | 16 |
| $H_2/C_{2-}$ | mol. | 0.25 | 0.29 |
| $C_{2-}/(C_{2-} + C_{3-})$ | mol. | 0.49 | 0.49 |
| Split | wt% | 47 | 42 |
| $C_{2-}$ content of C2 * | wt% | 63 | 63 |
| $C_{2-}$ content of (A2 + B2 + C2) | wt% | 59.6 | 60.2 |
| $C_{4-}$ content of (A2 + B2 + C2) | wt% | 2.5 | 2.1 |

(continued)

| 3rd Reactor - component (C) | | | |
|---|---|---|---|
| Xylene soluble of (C2) $(XS_{C2})$* | wt% | 74 | 74 |
| **Properties of resulting Component AY** | | **Polyolefin AY1** | **Polyolefin AY2** |
| | | | |
| MFR | g/10 min. | 0.85 | 2.4 |
| Density | gr/cc | 0.888 | 0.895 |
| Xylene soluble $(XS_{TOT})$ | wt% | 44.3 | 37.7 |
| Intrinsic Viscosity of $XS_{TOT}$ | dl/g | 2.71 | 2.40 |
| Total $C_2$- content | wt% | 60.8 | 60.8 |
| Total $C_4$- content | wt% | 2.1 | - |
| Flexural Modulus | MPa | 190 | 220 |
| Notes: $C_2$- = ethylene (IR); $C_3$- = propylene (IR); $C_4$- = 1-butene (IR); split = amount of polymer produced in the concerned reactor. * Calculated values. | | | |

Component B

GF: Glass fibers: White ECS O3T 480 (Nippon Electric Glass Company Ltd), with a fiber length of 3 mm and a diameter of 13 $\mu$m, or
Glass fibers: Chopvantage® HP 3270 (PPG Industries, Inc.) with a fiber length of 4.5 mm and a diameter of 10 $\mu$m.

Component C

PP-MA: Propylene homopolymer grafted with maleic anhydride (MA), with an MFR of 430 g/10 min as measured according to ISO 1133, with a load of 2.16 kg at 230 °C; and an MA level (high) in the range of from 0.5 to 1.0 wt% (Exxelor™ PO 1020, sold by ExxonMobil Chemical Company).

Component D

Metocene™ MF650Y is a commercial product sold by PolyMirae, an ultra-high melt flow rate resin with a very narrow molecular weight distribution (MFR (230 °C, 2.16 kg)) with an ASTM D 1238 L of 1,800 g/10 min and a density value with ASTM D 1505 of 0.91 g/cm$^3$.
Metocene™ HM2015 is a commercial product sold by PolyMirae, a polypropylene homopolymer characterized by very high flow and narrow molecular weight distribution (MFR (230 °C, 2.16 kg)) with an ASTM D 1238 L value of 140 g/10 min and a density value with ASTM D 1505 of 0.9 g/cm$^3$).
CM688A is a commercial product sold by SunAllomer Ltd., a polypropylene copolymer having an MFR (with ISO 1873-2,2:95) of 9.9 g/10min and a density value (with ISO 1873-2,2:95) 0.895 of g/cm$^3$.
Moplen® MP HF501N is a commercial product sold by LyondellBasell Industries, a polypropylene homopolymer with an MFR of 10 g/10 min (with ASTM D 1238) and a density value of 900 kg/m$^3$ (with ISO 1183).
The compositions contain conventional additives as indicated in Table 1.
The compositions are prepared by extrusion, using a twin screw extruder, model Werner&Pfleiderer ZSK40SC.
This line has a screw with a diameter (D) of 40 mm and a process length of approximately 48 L/*D* that is provided with gravimetric feeders. Components A, C and D are fed into the first barrel and component B is fed into the fourth barrel via forced side feeding.
A strand die plate with cooling bath and strand cutter (Scheer SGS100) is used to form pellets; vacuum degassing (barrel No. 9) is also applied to extract fumes and decomposition products.

Running conditions:

Screw speed: 300 rpm;
Capacity: 40-50 kg/h;
Barrel Temperature: 200-240 °C.

The final properties of the resulting composition are reported in Table 2, together with the relative amounts of the components.

**Table 1**

| Name (or Tradename) | | | Comp. Ex. 1 | Ex. 1 | Ex. 2 | Comp. Ex. 2 | Comp. Ex. 3 | Ex. 3 | Ex. 4 | Ex. 5 | Ex. 6 |
|---|---|---|---|---|---|---|---|---|---|---|---|
| Softell™ CA 7469 A | | | 42 | - | - | 48 | 48 | - | - | - | - |
| HIFLEX™ CA 7600 A | | | - | 44 | 48 | - | - | - | - | - | - |
| Polyolefin AX1 (HD based) | | | - | - | - | - | - | 41.6 | - | - | - |
| Polyolefin AX2 (HD based) | | | - | - | - | - | - | - | 41.6 | - | - |
| Polyolefin AY1 (LLD based) | | | - | - | - | - | - | - | - | 41.6 | - |
| Polyolefin AY2 (LLD based) | | | - | - | - | - | - | - | - | - | 41.6 |
| Metocene™ MF650Y | | | 17 | - | 22 | 33 | 32 | 26 | 26 | 26 | 26 |
| Metocene™ HM2015 | | | - | 26 | - | - | - | - | - | - | - |
| Glass Fibers ECS O3T 480 | | | 25 | - | - | 13 | - | - | - | - | - |
| Glass Fibers Chopvantage® 3270 | | | - | 25 | 25 | - | 13 | 15 | 15 | 15 | 15 |
| Exxelor™ PO 1020 | | | 1 | 1 | 1 | 1 | 1 | 1 | 1 | 1 | 1 |
| CM688A | | | - | - | - | - | - | 8 | 8 | 8 | 8 |
| Moplen™ MP HF501N | | | 11 | - | - | - | - | - | - | - | - |
| Pigments, additives, flakes | | | 4 | 4 | 4 | 5 | 6 | 8.4 | 8.4 | 8.4 | 8.4 |
| | | | 100 | 100 | 100 | 100 | 100 | 100 | 100 | 100 | 100 |

**Table 2**

| Property | Acc. to | Unit | Comp. Ex. 1 | Ex. 1 | Ex. 2 | Comp. Ex. 2 | Comp. Ex. 3 | Ex. 3 | Ex. 4 | Ex. 5 | Ex. 6 |
|---|---|---|---|---|---|---|---|---|---|---|---|
| MFR (230°C, 2,16 kg ) | ISO 1133 | g/10 min | 2.7 | **12.6** | **22.7** | 11.5 | 8.9 | **19.5** | 38.8 | 23.1 | 33.6 |
| Flexural modulus | ISO 178 | MPa | 3,605 | **3,20 4** | **3,16 5** | 2,132 | 2,214 | **2,71 6** | **2,82 2** | **2,41 9** | **2,49 9** |

(continued)

| Property | Acc. to | Unit | Comp. Ex. 1 | Ex. 1 | Ex. 2 | Comp. Ex. 2 | Comp. Ex. 3 | Ex. 3 | Ex. 4 | Ex. 5 | Ex. 6 |
|---|---|---|---|---|---|---|---|---|---|---|---|
| Impact notched at -30 °C | ISO 179/1e A | kJ/m$^2$ | 12.6 | **13.3** | **14.7** | 6 | 6.7 | **5.4** | **5.1** | **6.2** | **5.4** |
| Shrinkage 48h/RTat 40 bar | ISO 2554 | | | | | | | | | | |
| longitudinal | | % | 0.18 | **0.12** | **0.09** | 0.32 | 0.26 | **0.19** | **0.22** | **0.16** | **0.18** |
| transversal | | % | 0.86 | **0.73** | **0.62** | 0.83 | 0.85 | **0.73** | **0.77** | **0.69** | **0.68** |

The results reported in Table 2 show that the compositions of the present disclosure (Examples 1-6) exhibit a lower shrinkage at room temperature, without impairing in a substantial manner their mechanical properties, such as stiffness (measured by the Flexural Modulus method) and ductility (measured by the Impact Notched method) while presenting a higher MFR with respect to the Comparative Examples, which contain a different component A. This set of characteristics render the compositions of the present disclosure useful for the production of injection-molded articles, for example the interior parts of vehicles for the automotive industry.

## Claims

1. A composition having a melt flow rate (MFR), as measured according to ISO 1133 with a load of 2.16 kg at 230 °C, of from 12 to 100 g/10 min, comprising components A, B, C and D comprising:

   A) 30-60% by weight of a polyolefin composition selected from AX and AY, wherein AX comprises:

   (A1) 5-35% by weight of a propylene-based polymer containing 90% by weight or more of propylene units and containing 10% by weight or less of a fraction soluble in xylene at 25 °C (XSA1), where both the amount of propylene units and the fraction XSA1 refer to the weight of (A1);
   (B1) 25-50% by weight of an ethylene homopolymer containing 5% by weight or less of a fraction soluble in xylene at 25 °C (XSB1) referring to the weight of (B1); and
   (C1) 30-60% by weight of a copolymer of ethylene and propylene containing from 25% to 75% by weight of ethylene units and containing from 55% to 95% by weight of a fraction soluble in xylene at 25 °C (XSC1), where both the amount of ethylene units and the fraction XSC1 refers to the weight of (C1);
   the amounts of (A1), (B1) and (C1) being referred to the total weight of (A1) + (B1) + (C1); and
   AY comprises:

   (A2) 5-35% by weight of a propylene-based polymer containing 90% by weight or more of propylene units and containing 10% by weight or less of a fraction soluble in xylene at 25 °C (XSA2), where both the amount of propylene units and the fraction XSA2 refer to the weight of (A2);
   (B2) 25-50% by weight of a copolymer of ethylene and a C3-C8 alpha-olefin containing from 0.1% to 20% by weight of alpha-olefin units and containing 75% by weight or less of a fraction soluble in xylene at 25 °C (XSB2), where both the amount of ethylene units and the fraction XSB2 refer to the weight of (B2); and
   (C2) 30-60% by weight of a copolymer of ethylene and propylene containing from 25% to 75% by weight of ethylene units and containing from 55% to 95% by weight of a fraction soluble in xylene at 25 °C (XSC2), where both the amount of ethylene units and of the fraction XSC2 refer to the weight of (C2);
   the amounts of (A2), (B2) and (C2) refer to the total weight of (A2) + (B2) + (C2);

   B) 5-30% by weight of a glass fiber filler;
   C) 0-5% by weight of a compatibilizer; and
   D) 10-40% by weight of a polypropylene component selected from propylene homopolymers, propylene copolymers containing up to 5% by moles of ethylene and/or $C_4$-$C_{10}$ $\alpha$-olefin(s) and combinations thereof.

2. The composition according to claim 1, having an MFR from 12 to 50 g/10min.

3. The composition according to claims 1 or 2, wherein component A is 40-55% by weight.

4. The composition according to any preceding claims, wherein component B is 10-25% by weight.

5. The composition according to any preceding claims, wherein component C is 0.5-3% by weight.

6. The composition according to any preceding claims, wherein component D is 15-35 % by weight.

7. The composition according to any preceding claims, wherein the glass fibers of component B have a length of from 1 to 50 mm.

8. The composition according to any preceding claims, wherein the glass fibers of component B have a diameter of from 8 to 15 $\mu$m.

9. The composition according to any preceding claims, wherein component C has a Melt Flow Rate from 50 to 400 g/10 min.

10. The composition according to any preceding claims, wherein, if the MFR of the polypropylene component D is of less than 500 g/10 min, component D can comprise two polymer fractions $D^I$ and $D^{II}$ selected from the propylene homopolymers and copolymers, wherein fraction $D^{II}$ has a higher MFR value with respect to $D^I$, with a difference of at least 3 g/10 min.

11. An injection molded article comprising the composition according to any preceding claims.

12. An extrusion article comprising the composition according to any claims from 1 to 10.

13. A thermoformed article comprising the composition according to any claims from 1 to 10.

14. Use of the composition according to any claims from 1 to 10, as a concentrate or a masterbatch.

15. A process for preparing the composition according to any claims from 1 to 10, comprising melting and mixing the components A, B, C and D, wherein the mixing is effected in a mixing apparatus at temperatures from 180 to 320 °C, or from 200 to 280 °C or from 200 to 260 °C.

**Patentansprüche**

1. Zusammensetzung mit einer Schmelzflussrate (MFR), gemessen gemäß ISO 1133 unter einer Last von 2,16 kg bei 230 °C, von 12 bis 100 g/10 min, umfassend Komponenten A, B, C und D, umfassend:

A) 30 bis 60 Gew.% einer Polyolefinzusammensetzung ausgewählt aus AX und AY,
wobei AX umfasst:

(A1) 5 bis 35 Gew.% von einem Polymer auf Propylenbasis, das 90 Gew.% oder mehr Propyleneinheiten enthält, und 10 Gew.% oder weniger von einer in Xylol bei 25 °C löslichen Fraktion (XSA1) enthält, wobei sich sowohl die Menge der Propyleneinheiten als auch die Menge der Fraktion XSA1 auf das Gewicht von (A1) beziehen;
(B1) 25 bis 50 Gew.% eines Ethylenhomopolymers, das 5 Gew.% oder weniger von einer in Xylol bei 25 °C löslichen Fraktion (XSB1) enthält, bezogen auf das Gewicht von (B1); und
(C1) 30 bis 60 Gew.% eines Copolymers von Ethylen und Propylen, das 25 Gew.% bis 75 Gew.% Ethyleneinheiten enthält, und 55 Gew.% bis 95 Gew.% von einer in Xylol bei 25 °C löslichen Fraktion (XSC1) enthält, wobei sich sowohl die Menge der Ethyleneinheiten als auch die Menge der Fraktion XSC1 auf das Gewicht von (C1) beziehen;
die Mengen an (A1), (B1) und (C1) sich auf das Gesamtgewicht von (A1) + (B1) + (C1) beziehen; und
AY umfasst:

(A2) 5 bis 35 Gew.% von einem Polymer auf Propylenbasis, das 90 Gew.% oder mehr Propyleneinheiten enthält, und 10 Gew.% oder weniger von einer in Xylol bei 25 °C löslichen Fraktion (XSA2) enthält, wobei sich sowohl die Menge der Propyleneinheiten als auch die Menge der Fraktion XSA2 auf das Gewicht von (A2) beziehen;

(B2) 25 bis 50 Gew.% eines Copolymers von Ethylen und einem $C_3$- bis $C_8$-alpha-Olefin, das 0,1 Gew.% bis 20 Gew.% alpha-Olefineinheiten enthält, und 75 Gew.% oder weniger von einer in Xylol bei 25 °C löslichen Fraktion (XSB2) enthält, wobei sich sowohl die Menge der alpha-Ethyleneinheiten als auch die Menge der Fraktion XSB2 auf das Gewicht von (B2) beziehen; und

(C2) 30 bis 60 Gew.% eines Copolymers von Ethylen und Propylen, das 25 Gew.% bis 75 Gew.% Ethyleneinheiten enthält, und 55 Gew.% bis 95 Gew.% von einer in Xylol bei 25 °C löslichen Fraktion (XSC2) enthält, wobei sich sowohl die Menge der Ethyleneinheiten als auch die Menge der Fraktion XSC2 auf das Gewicht von (C2) beziehen;

die Mengen an (A2), (B2) und (C2) sich auf das Gesamtgewicht von (A2) + (B2) + (C2) beziehen;

B) 5 bis 30 Gew.% eines Glasfaserfüllstoffs;

C) 0 bis 5 Gew.% eines Verträglichmachers; und

D) 10 bis 40 Gew.% einer Polypropylenkomponente ausgewählt aus Propylenhomopolymeren, Propylencopolymeren, die bis zu 5 Mol.% von Ethylen und/oder $C_4$- bis $C_{10}$-$\alpha$-Olefin(en) enthalten, und Kombinationen davon.

2. Zusammensetzung nach Anspruch 1 mit einer MFR von 12 bis 50 g/10 min.

3. Zusammensetzung nach den Ansprüchen 1 oder 2, wobei Komponente A 40 bis 55 Gew.% beträgt.

4. Zusammensetzung nach einem der vorhergehenden Ansprüche, wobei Komponente B 10 bis 25 Gew.% beträgt.

5. Zusammensetzung nach einem der vorhergehenden Ansprüche, wobei Komponente C 0,5 bis 3 Gew.% beträgt.

6. Zusammensetzung nach einem der vorhergehenden Ansprüche, wobei Komponente D 15 bis 35 Gew.% beträgt.

7. Zusammensetzung nach einem der vorhergehenden Ansprüche, wobei die Glasfasern von Komponente B eine Länge von 1 bis 50 mm aufweisen.

8. Zusammensetzung nach einem der vorhergehenden Ansprüche, wobei die Glasfasern von Komponente B einen Durchmesser von 8 bis 15 $\mu$m aufweisen.

9. Zusammensetzung nach einem der vorhergehenden Ansprüche, wobei Komponente C eine Schmelzflussrate von 50 bis 400 g/10 min aufweist.

10. Zusammensetzung nach einem der vorhergehenden Ansprüche, wobei Komponente D, falls die MFR der Polypropylenkomponente D kleiner als 500 g/10 min ist, zwei Polymerfraktionen $D^I$ und $D^{II}$ ausgewählt aus den Propylenhomopolymeren und -copolymeren umfassen kann, wobei Fraktion $D^{II}$ einen höheren MFR-Wert in Bezug auf $D^I$ aufweist, mit einer Differenz von mindestens 3 g/10 min.

11. Spritzgießartikel, umfassend die Zusammensetzung gemäß einem der vorhergehenden Ansprüche.

12. Extrusionsartikel, umfassend die Zusammensetzung gemäß einem der Ansprüche 1 bis 10.

13. Thermogeformter Artikel, umfassend die Zusammensetzung gemäß einem der Ansprüche 1 bis 10.

14. Verwendung der Zusammensetzung gemäß einem der Ansprüche 1 bis 10 als Konzentrat oder Masterbatch.

15. Verfahren zur Herstellung der Zusammensetzung gemäß einem der Ansprüche 1 bis 10, umfassend Schmelzen und Mischen der Komponenten A, B, C und D, wobei das Mischen in einem Mischapparat bei Temperaturen von 180 bis 320 °C oder 200 bis 280 °C oder 200 bis 260 °C bewirkt wird.

**Revendications**

1. Composition présentant un indice de fluidité à chaud (MFR), tel que mesuré selon la norme ISO 1133 sous une charge de 2,16 kg à 230 °C, de 12 à 100 g/10 min, comprenant des constituants A, B, C et D comprenant :

A) 30 à 60 % en poids d'une composition polyoléfinique choisie parmi AX et AY,

AX comprenant :

(A1) 5 à 35 % en poids d'un polymère à base de propylène contenant 90 % en poids ou plus de motifs de propylène et contenant 10 % en poids ou moins d'une fraction soluble dans le xylène à 25 °C (XSA1), à la fois la quantité de motifs de propylène et de la fraction XSA1 se rapportant au poids de (A1) ;
(B1) 25 à 50 % en poids d'un homopolymère d'éthylène contenant 5 % en poids ou moins d'une fraction soluble dans le xylène à 25 °C (XSB1) par rapport au poids de (B1) ; et
(C1) 30 à 60 % en poids d'un copolymère d'éthylène et de propylène contenant 25 % à 75 % en poids de motifs d'éthylène et contenant 55 % à 95 % en poids d'une fraction soluble dans le xylène à 25 °C (XSC1), à la fois la quantité de motifs d'éthylène et de la fraction XSC1 se rapportant au poids de (C1) ;
les quantités de (A1), (B1) et (C1) se rapportant au poids total de (A1) + (B1) + (C1) ; et

AY comprenant :

(A2) 5 à 35 % en poids d'un polymère à base de propylène contenant 90 % en poids ou plus de motifs de propylène et contenant 10 % en poids ou moins d'une fraction soluble dans le xylène à 25 °C (XSA2), à la fois la quantité de motifs de propylène et de la fraction XSA2 se rapportant au poids de (A2) ;
(B2) 25 à 50 % en poids d'un copolymère d'éthylène et d'une alpha-oléfine en C3-C8 contenant 0,1 % à 20 % en poids de motifs d'alpha-oléfine et contenant 75 % en poids ou moins d'une fraction soluble dans le xylène à 25 °C (XSB2), à la fois la quantité de motifs d'éthylène et de la fraction XSB2 se rapportant poids de (B2) ; et
(C2) 30 à 60 % en poids d'un copolymère d'éthylène et de propylène contenant 25 % à 75 % en poids de motifs d'éthylène et contenant 55 % à 95 % en poids d'une fraction soluble dans le xylène à 25 °C (XSC2), à la fois la quantité de motifs d'éthylène et de la fraction XSC2 se rapportant au poids de (C2) ;
les quantités de (A2), (B2) et (C2) se rapportant au poids total de (A2) + (B2) + (C2) ;

B) 5 à 30 % en poids d'une charge de fibres de verre ;
C) 0 à 5 % en poids d'un agent de compatibilité ; et
D) 10 à 40 % en poids d'un constituant polypropylène choisi parmi les homopolymères de propylène, les copolymères de propylène contenant jusqu'à 5 % en mole d'éthylène et/ou d'$\alpha$-oléfine(s) en $C_4$-$C_{10}$ et leurs combinaisons.

2. Composition selon la revendication 1, présentant un MFR de 12 à 50 g/10 min.

3. Composition selon les revendications 1 ou 2, le constituant A représentant 40 à 55 % en poids.

4. Composition selon l'une quelconque des revendications précédentes, le constituant B représentant 10 à 25 % en poids.

5. Composition selon l'une quelconque des revendications précédentes, le constituant C représentant 0,5 à 3 % en poids.

6. Composition selon l'une quelconque des revendications précédentes, le constituant D représentant 15 à 35 % en poids.

7. Composition selon l'une quelconque des revendications précédentes, les fibres de verre du constituant B présentant une longueur de 1 à 50 mm.

8. Composition selon l'une quelconque des revendications précédentes, les fibres de verre du constituant B présentant un diamètre de 8 à 15 $\mu$m.

9. Composition selon l'une quelconque des revendications précédentes, le constituant C présentant un indice de fluidité à chaud de 50 à 400 g/10 min.

10. Composition selon l'une quelconque des revendications précédentes, dans laquelle, si le MFR du constituant polypropylène D est de ou inférieur à 500 g/10 min, le constituant D peut comprendre deux fractions polymères $D^I$ et $D^{II}$ choisies parmi les homopolymères et les copolymères de propylène, la fraction $D^{II}$ présentant une valeur MFR supérieure à celle de $D^I$, avec une différence d'au moins 3 g/10 min.

11. Article moulé par injection comprenant la composition selon l'une quelconque des revendications précédentes.

12. Article d'extrusion comprenant la composition selon l'une quelconque des revendications 1 à 10.

13. Article thermoformé comprenant la composition selon l'une quelconque des revendications 1 à 10.

14. Utilisation de la composition selon l'une quelconque des revendications 1 à 10 en tant que concentré ou mélange maître.

15. Procédé de préparation de la composition selon l'une quelconque des revendications 1 à 10, comprenant la fusion et le mélange des constituants A, B, C et D, le mélange étant effectué dans un appareil de mélange à des températures de 180 à 320 °C ou de 200 à 280 °C ou de 200 à 260 °C.

**REFERENCES CITED IN THE DESCRIPTION**

**Patent documents cited in the description**

- EP 2121829 A
- EP 2092004 A
- EP 2092015 A
- WO 2015000738 A
- EP 2016064450 W
- EP 2016064453 W
- EP 0572028 A
- WO 2010069998 A

**Non-patent literature cited in the description**

- **HUGGINS, M.L.** *J. Am. Chem. Soc.*, 1942, vol. 64, 2716